# EUROPEAN PATENT APPLICATION

(11) **EP 4 604 201 A1**
(43) Date of publication of application: **20.08.2025**
(21) Application number: 23920356.5
(22) Date of filing: 07.02.2023
(51) Int. Cl.: H01M 4/36, H01M 4/58

(54) **POSITIVE ELECTRODE ACTIVE MATERIAL AND PREPARATION METHOD THEREFOR, POSITIVE ELECTRODE SHEET, BATTERY AND ELECTRIC DEVICE**

(71) Applicant: Contemporary Amperex Technology (Hong Kong) Limited, Hong Kong (HK)
(72) Inventor: JIANG, Yao, Ningde, Fujian 352100 (CN); ZHANG, Xinxin, Ningde, Fujian 352100 (CN); OUYANG, Chuying, Ningde, Fujian 352100 (CN); YUAN, Tianci, Ningde, Fujian 352100 (CN); WANG, Zhiqiang, Ningde, Fujian 352100 (CN); CHEN, Shangdong, Ningde, Fujian 352100 (CN); XU, Bo, Ningde, Fujian 352100 (CN)
(74) Representative: Jacob, Reuben Ellis
(86) International application number: PCT/CN2023/074786
(87) International publication number: WO 2024/164143

(57) **Abstract**

The present disclosure provides a positive electrode active material and a preparation method therefor, a positive electrode sheet, a battery and an electric device. The positive electrode active material comprises: a core; and a carbon coating layer which covers at least part of the surface of the core, the molar ratio of sp³ hybridized carbon atoms to sp² hybridized carbon atoms in the carbon coating layer being not less than 0.5.

## Description

### TECHNICAL FIELD

The present application relates to the field of batteries, and in particular, to a positive electrode active material and a preparation method therefor, a positive electrode plate, a battery, and an electric device.

### BACKGROUND

In recent years, with the development of lithium-ion battery technology, lithium-ion batteries have been widely used in energy storage power systems such as hydropower, thermal power, wind power, and solar power stations, as well as in various fields such as electric tools, electric bicycles, electric motorcycles, electric vehicles, military equipment, and aerospace. At present, numerous problems remain to be solved in the industrial production and application of lithium-ion batteries.

### SUMMARY

In one aspect of the present application, the present application provides a positive electrode active material, which includes: a core; and a carbon coating layer, the carbon coating layer covering at least part of the surface of the core, where the molar ratio of sp² hybridized carbon atoms to sp³ hybridized carbon atoms in the carbon coating layer is not less than 0.5. Thereby, the water absorption of the positive electrode active material can be reduced.

According to the embodiments of the present application, the core includes a phosphate; preferably, the phosphate includes at least one of lithium manganese phosphate, lithium iron phosphate, and lithium manganese iron phosphate. Thereby, the core material can be coated with carbon on its surface to improve its conductivity and optimize the performance of the battery using the core material.

According to the embodiments of the present application, the core includes LiMPO₄, the M element including Mn and a non-Mn element. Thereby, the core material can be coated with carbon on its surface to improve its conductivity and optimize the performance of the battery using the core material.

According to the embodiments of the present application, the non-Mn element includes one or two of a first doping element and a second doping element, the first doping element being doped at the manganese site, and the second doping element being doped at the phosphorus site. Thereby, the cycling stability of the positive electrode active material can be improved.

According to the embodiments of the present application, the first doping element includes one or more elements of Zn, Al, Na, K, Mg, Mo, W, Ti, V, Zr, Fe, Ni, Co, Ga, Sn, Sb, Nb, and Ge; preferably, the first doping element includes at least two of Fe, Ti, V, Ni, Co, and Mg. Thereby, the specific capacity of the positive electrode active material can be further.

According to the embodiments of the present application, the second doping element includes one or more elements of B (boron), S, Si, and N. Thereby, the specific capacity of the positive electrode active material can be further.

According to the embodiments of the present application, the core includes Li₁₊ₓMn_{1-y}A_{y}P_{1-z}R_{z}O₄, where x is any value in the range of -0.100 to 0.100, y is any value in the range of 0.001 to 0.500, z is any value in the range of 0.001 to 0.100, A includes one or more elements of Zn, Al, Na, K, Mg, Mo, W, Ti, V, Zr, Fe, Ni, Co, Ga, Sn, Sb, Nb, and Ge, and R includes one or more elements of B (boron), S, Si, and N. Thereby, the structural stability and capacity performance of the positive electrode active material can be improved.

According to the embodiments of the present application, the core includes Li₁₊ₓCₘMn_{1-y}A_{y}P_{1-z}R_{z}O₄₋ₙDₙ, where x is any value in the range of -0.100 to 0.100, y is any value in the range of 0.001 to 0.500, z is any value in the range of 0.001 to 0.100, n is any value in the range of 0.001 to 0.1, m is any value in the range of 0.9 to 1.1, C includes one or more elements of Zn, Al, Na, K, Mg, Nb, Mo, and W, A includes one or more elements of Zn, Al, Na, K, Mg, Mo, W, Ti, V, Zr, Fe, Ni, Mg, Co, Ga, Sn, Sb, Nb, and Ge, R includes one or more elements of B (boron), S, Si, and N, and D includes one or more elements of S, F, Cl, and Br. Thereby, the specific capacity and compacted density of the positive electrode active material can be further improved.

According to the embodiments of the present application, the molar ratio of sp² hybridized carbon atoms to sp³ hybridized carbon atoms in the carbon coating layer is not less than 0.8. Thereby, the structural orderliness of the carbon coating layer can be improved, the structure of the carbon coating layer can be denser, and the pores on the carbon coating layer can be reduced, so as to further reduce the water absorption of the positive electrode active material.

According to the embodiments of the present application, the thickness of the carbon coating layer is not greater than 10 nm; preferably, the thickness of the carbon coating layer is 4 nm-8 nm. Thereby, the conductivity of the positive electrode active material is improved while the water absorption is reduced.

According to the embodiments of the present application, the content of the carbon element in the positive electrode active material is not greater than 3 wt%; preferably, the content of the carbon element in the positive electrode active material is 1 wt%-2.5 wt%. Thereby, the positive electrode active material can have both relatively good conductivity and relatively low water absorption.

According to the embodiments of the present application, the specific surface area of the positive electrode active material is not greater than 25 m²/g; preferably, the specific surface area of the positive electrode active material is not greater than 18 m²/g. Thereby, the positive electrode active material can have relatively high conductivity, relatively high specific capacity, and relatively low water absorption.

According to the embodiments of the present application, the median particle size of the positive electrode active material is not greater than 2 µm; preferably, the median particle size of the positive electrode active material is 0.5 µm-1.5 µm. Thereby, the lithium-ion migration rate of the positive electrode active material can be improved, and the specific capacity of the positive electrode active material can be improved.

According to the embodiments of the present application, the powder resistivity of the positive electrode active material is not greater than 200 Ω·cm; preferably, the powder resistivity of the positive electrode active material is not greater than 100 Ω·cm. Thereby, the conductivity of the positive electrode active material can be further improved by providing the carbon coating layer while maintaining relatively low water absorption.

In another aspect of the present application, the present application provides a method for preparing a positive electrode active material, where a core is provided; and a carbon coating layer is formed on at least part of the surface of the core. Thereby, the aforementioned positive electrode active material can be obtained by a simple method, and the method has all the characteristics and advantages of the aforementioned positive electrode active material, which will not be repeated here.

According to the embodiments of the present application, forming the carbon coating layer on at least part of the surface of the core includes: forming a pre-carbon coating layer on the surface of the core through a carbon source to obtain a pre-coated positive electrode active material; and under an inert gas atmosphere, performing a sintering treatment on the pre-coated positive electrode active material to form the carbon coating layer, thereby obtaining the positive electrode active material, where the carbon source includes a first carbon source and a second carbon source. Thereby, a carbon coating layer with a relatively high degree of graphitization can be formed on the surface of the core.

According to the embodiments of the present application, forming the carbon coating layer on at least part of the surface of the core includes: mixing the core with the first carbon source, and performing a first sintering treatment to obtain a first coated positive electrode active material; and mixing the first coated positive electrode active material with the second carbon source, and performing a second sintering treatment to obtain the positive electrode active material. Thereby, a carbon coating layer with a relatively high degree of graphitization can be formed on the surface of the core.

According to the embodiments of the present application, the first carbon source includes at least one of polyvinyl alcohol, polyethylene glycol, and citric acid; the second carbon source includes at least one of starch, sucrose, and glucose. Thereby, a carbon coating layer with a relatively high degree of graphitization can be formed on the surface of the core.

According to the embodiments of the present application, when the first carbon source is a polymer, the molecular weight of the first carbon source is not less than 1000; preferably, the molecular weight of the first carbon source is 2000-5000. Thereby, a carbon coating layer with a relatively high degree of graphitization can be obtained.

According to the embodiments of the present application, the sintering treatment is performed at a temperature of 650 °C-800 °C, and the sintering treatment is performed for 6 h-12 h. Thereby, a carbon coating layer with a relatively high degree of graphitization can be formed on the surface of the core.

According to the embodiments of the present application, the first sintering treatment is performed at a temperature of 350 °C-800 °C, and the first sintering treatment is performed for 6 h-12 h. Thereby, a carbon coating layer with a relatively high degree of graphitization can be formed on the surface of the core.

According to the embodiments of the present application, the second sintering treatment is performed at a temperature of 650 °C-850 °C, and the second sintering treatment is performed for 6 h-24 h. Thereby, a carbon coating layer with a relatively high degree of graphitization can be formed on the surface of the core.

In another aspect of the present application, the present application provides a positive electrode plate, which includes a positive electrode current collector and a positive electrode active material layer, where the positive electrode active material layer is located on one side of the positive electrode current collector, the positive electrode active material layer includes the aforementioned positive electrode active material, and/or the positive electrode active material layer includes a positive electrode active material prepared by using the aforementioned method. Thereby, the positive electrode plate has all the characteristics and advantages of the aforementioned positive electrode active material, which will not be repeated here.

In another aspect of the present application, the present application provides a battery, which includes a positive electrode plate, where the positive electrode plate is the aforementioned positive electrode plate. Thereby, the battery has all the characteristics and advantages of the aforementioned positive electrode plate, which will not be repeated here.

In another aspect of the present application, the present application provides an electric device, which includes a battery, where the battery is the aforementioned battery. Thereby, the electric device has all the characteristics and advantages of the aforementioned battery, which will not be repeated here.

### BRIEF DESCRIPTION OF THE DRAWINGS

The above and/or additional aspects and advantages of the present application will become apparent and readily understood from the following description of embodiments in conjunction with the accompanying drawings below, in which:
FIG. 1 shows a schematic structural diagram of a positive electrode plate according to one example of the present application;
FIG. 2 is a schematic diagram of a battery according to one embodiment of the present application;
FIG. 3 is an exploded view of the battery according to one embodiment of the present application as shown in FIG. 2;
FIG. 4 is a schematic diagram of a battery module according to one embodiment of the present application;
FIG. 5 is a schematic diagram of a battery pack according to one embodiment of the present application;
FIG. 6 is an exploded view of the battery pack according to one embodiment of the present application as shown in FIG. 5;
FIG. 7 is a schematic diagram of an electric device using a battery as a power source according to one embodiment of the present application.

Description of the reference numerals:
1: battery pack; 2: upper case body; 3: lower case body; 4: battery module; 5: battery; 10: positive electrode plate; 11: positive electrode current collector; 12: positive electrode active material layer; 51: housing; 52: electrode assembly; 53: top cover assembly.

### DETAILED DESCRIPTION

The embodiments of the present disclosure are described in detail below. The embodiments described below are exemplary and are merely used to explain the present disclosure, and they should not be construed as limiting the present disclosure. Examples without techniques or conditions specified therein are implemented according to techniques or conditions described in the literature in the art or according to product instructions.

In one aspect of the present application, the present application provides a positive electrode active material, which includes: a core; and a carbon coating layer, the carbon coating layer covering at least part of the surface of the core, where the molar ratio of sp² hybridized carbon atoms to sp³ hybridized carbon atoms in the carbon coating layer is not less than 0.5. When the sp² hybridized carbon atoms and the sp³ hybridized carbon atoms in the carbon coating layer of the positive electrode active material are within the aforementioned range, the pore structure of the carbon coating layer is relatively dense, which can significantly reduce the water absorption capacity of the carbon coating layer, and then reduce the water absorption of the positive electrode active material, thereby improving the safety performance and cycle performance of the battery.

For ease of understanding, the principle that the positive electrode active material in the present application has the beneficial effects described above is explained below:

Since the electric potential of lithium-ion batteries is significantly higher than the stable voltage range of water, lithium-ion batteries are very sensitive to moisture, and even a trace amount of moisture can seriously affect the performance of lithium-ion batteries. Therefore, the moisture content in the materials must be strictly controlled throughout the entire production process. For example, in the battery production process, the electrode plates need to be dried after the current collector is coated, the electrode plates need to be dried after cold pressing, and the battery cells need to be dried after winding, etc. In addition, the environmental moisture needs to be strictly controlled throughout the entire battery production process. The drying treatment and the environmental moisture control in the battery production process consume a lot of energy, making the battery production process complicated.

In the present application, the inventors found that in order to improve the conductivity of the core, a carbon coating layer can be formed on the surface of the core to improve the conductivity of the positive electrode active material. Further, when the carbon coating layer of the positive electrode active material is in a loose and porous state, the loose and porous carbon coating layer structure will accelerate the absorption and storage of moisture by the positive electrode active material. As a result, the capacities of water absorption and water storage by the positive electrode active material are both enhanced, leading to water absorption by the positive electrode active material during storage and processing. This ultimately results in a relatively high water content in the positive electrode active material. The presence of a high water content in the battery will cause the lithium salt in the electrolytic solution to decompose, which will significantly reduce the cycle performance of the battery.

Further, the inventors found that removing as much moisture as possible from the positive electrode active material by operations such as simply increasing the drying temperature or extending the drying time can lead to problems such as excessive energy consumption and a significant increase in the processing time. In addition, prolonged high-temperature drying can have adverse effects such as aging and failure on other assemblies in the battery cell, such as the separation film assembly, leading to a noticeable increase in manufacturing costs. Based on the aforementioned theoretical analysis and experimental research, the inventors found that by improving the pore state of the carbon coating layer of the positive electrode active material, the water absorption of the positive electrode active material can be effectively reduced without adding additional process flows and improving the process environment. Specifically, the inventors found that when the molar ratio of sp² hybridized carbon atoms to sp³ hybridized carbon atoms in the carbon coating layer on the surface of the core is not less than 0.5, the structural orderliness of the carbon coating layer of the positive electrode active material is relatively high, and the pore structure of the carbon coating layer has relatively high compactness and a relatively small pore size distribution range. In the battery production process, it is difficult for external moisture to enter the pores of the carbon coating layer, thereby effectively reducing the water absorption and water storage properties of the positive electrode active material, improving the safety performance and cycle performance of the battery, effectively lowering energy consumption during drying, and significantly reducing production costs.

According to some embodiments of the present application, the type of the core is not particularly limited. For example, the core may include a phosphate; preferably, the phosphate may include at least one of lithium manganese phosphate, lithium iron phosphate, and lithium manganese iron phosphate. Lithium manganese phosphate, lithium iron phosphate, and lithium manganese iron phosphate have relatively high specific capacities and relatively low raw material costs. Since the positive electrode active material will undergo an electrochemical reaction when used in the battery, the participation of electrons is required. Therefore, in order to increase the electron transport between particles and the electron transport between different positions inside the particles, materials with relatively good conductivity can be used. By coating the surface of the phosphate core with a carbon layer, a positive electrode active material with a low cost, a high specific capacity, and high conductivity can be obtained, thereby optimizing the performance of batteries using the positive electrode active material.

According to some embodiments of the present application, the type of the core is not particularly limited. For example, the core may include LiMPO₄, the M element including Mn and a non-Mn element. Preferably, the non-Mn element may include one or two of a first doping element and a second doping element, the first doping element being doped at the manganese site, and the second doping element being doped at the phosphorus site. The first doping element and the second doping element can not only effectively reduce manganese dissolution, thereby decreasing the migration of manganese ions to the negative electrode, decreasing the consumption of the electrolytic solution due to SEI film decomposition, and improving the cycle performance and safety performance of the secondary battery, but also promote Mn-O bond adjustment, reduce the migration barrier for lithium ions, promote lithium ion migration, and improve the rate capability of the battery.

According to some embodiments of the present application, the type of the first doping element is not particularly limited. For example, the first doping element may include one or more elements of Zn, Al, Na, K, Mg, Mo, W, Ti, V, Zr, Fe, Ni, Co, Ga, Sn, Sb, Nb, and Ge; preferably, the first doping element may include at least two of Fe, Ti, V, Ni, Co, and Mg. The first doping element can further reduce the lattice change rate of the positive electrode active material and reduce the surface activity of the material, thereby inhibiting Mn dissolution and the interfacial side reactions between the positive electrode material and the electrolytic solution. Doping two or more metals within the range described above is beneficial to enhancing the doping effect and further reducing the surface oxygen activity, thereby inhibiting manganese dissolution. In addition, the doping of multiple elements can increase the synergistic effect among elements, thereby increasing the battery capacity while decreasing the lattice change rate of the material and enhancing the dynamics performance of the battery.

According to some embodiments of the present application, the type of the second doping element is not particularly limited. For example, the second doping element may include one or more elements of B (boron), S, Si, and N. The second doping element can increase the change rate of the Mn-O bond, improve the migration barrier of the small polaron of the positive electrode active material, and enhance the electronic conductivity. In addition, the doping of the second element can also reduce the concentration of anti-site defects in the material, thereby improving the dynamics performance and specific capacity of the material, and can change the material morphology, thus improving the compacted density of the material.

According to some embodiments of the present application, the type of the core is not particularly limited. For example, the core may include Li₁₊ₓMn_{1-y}A_{y}P_{1-z}R_{z}O₄, where x is any value in the range of -0.100 to 0.100, y is any value in the range of 0.001 to 0.500, z is any value in the range of 0.001 to 0.100, A includes one or more elements of Zn, Al, Na, K, Mg, Mo, W, Ti, V, Zr, Fe, Ni, Co, Ga, Sn, Sb, Nb, and Ge, and R includes one or more elements of B (boron), S, Si, and N. The manganese-site doping element A selected from the elements described above helps to decrease the lattice change rate of lithium manganese phosphate in the process of lithium deintercalation and intercalation, and thus improves the structural stability of the positive electrode active material, as well as greatly decreases manganese dissolution and reduces the oxygen activity on the surface of the particles; the phosphorus-site doping element R selected from the elements described above also helps to change the difficulty of the Mn-O bond length variation, thereby improving electronic conductivity and reducing the migration barrier for lithium ions, promoting lithium ion migration, and improving the rate capability of the secondary battery. If the value of x is too small, the lithium content of the entire core will be reduced, which affects the specific capacity performance of the positive electrode active material. The value of y limits the total amount of all doping elements. If y is too small, that is, the doping amount is too little, the doping elements will not be effective. If y exceeds 0.5, the Mn content in the system will be relatively low, affecting the voltage plateau of the positive electrode active material. The R element is doped at the position of P. Since the P-O tetrahedron is relatively stable, a too-large z value can affect the stability of the positive electrode active material. Therefore, when x, y, and z are selected from the range described above, the positive electrode active material can have relatively good performance.

Unless otherwise stated, in the chemical formula of the core described above, when a certain doping site has two or more elements, the limitation on the numerical range of x, y, z, or m described above is not only a limitation on the stoichiometric number of each element at the site, but also a limitation on the sum of the stoichiometric numbers of all elements at the site. For example, when a compound has a chemical formula of Li₁₊ₓMn_{1-y}A_{y}P_{1-z}R_{z}O₄, where A is two or more elements A1, A2, ..., An, the stoichiometric numbers y1, y2, ..., yn of A1, A2, ..., An each must fall within a numerical range of y limited in the present application, and the sum of y1, y2, ..., yn must also fall within the numerical range. Similarly, in the case where R is two or more elements, the limitation on the numerical range of the stoichiometric number of R in the present application also has the meaning described above.

According to some embodiments of the present application, the type of the core is not particularly limited. For example, the core may include Li₁₊ₓCₘMn_{1-y}A_{y}P_{1-z}R_{z}O₄₋ₙDₙ, where the value of x is affected by the valence states of A and R, as well as the values of y and z, so as to ensure that the entire system is electrically neutral. If the value of x is too small, the lithium content of the entire core system will be reduced, which affects the specific capacity performance of the material. The value of y limits the total amount of all doping elements. If y is too small, that is, the doping amount is too little, the doping elements will not be effective. If y exceeds 0.5, the Mn content in the system will be relatively low, affecting the voltage plateau of the material. The R element is doped at the position of P. Since the P-O tetrahedron is relatively stable and a too-large z value can affect the stability of the material, the z value is limited to 0.001-0.100. More specifically, x is any value in the range of -0.100 to 0.100, y is any value in the range of 0.001 to 0.500, z is any value in the range of 0.001 to 0.100, n is any value in the range of 0.001 to 0.1, and m is any value in the range of 0.9 to 1.1. For example, 1+x is selected from the range of 0.9 to 1.1, such as 0.97, 0.977, 0.984, 0.988, 0.99, 0.991, 0.992, 0.993, 0.994, 0.995, 0.996, 0.997, 0.998, or 1.01; x is selected from the range of 0.001 to 0.1, such as 0.001 or 0.005; y is selected from the range of 0.001 to 0.5, such as 0.001, 0.005, 0.02, 0.05, 0.1, 0.15, 0.2, 0.25, 0.3, 0.34, 0.345, 0.349, 0.35, or 0.4; z is selected from the range of 0.001 to 0.1, such as 0.001, 0.005, 0.08, or 0.1; n is selected from the range of 0.001 to 0.1, such as 0.001, 0.005, 0.08, or 0.1. Additionally, the positive electrode active material is electrically neutral. C includes one or more elements of Zn, Al, Na, K, Mg, Nb, Mo, and W, A includes one or more elements of Zn, Al, Na, K, Mg, Mo, W, Ti, V, Zr, Fe, Ni, Mg, Co, Ga, Sn, Sb, Nb, and Ge, R includes one or more elements of B (boron), S, Si, and N, and D includes one or more elements of S, F, Cl, and Br. By doping specific elements in specific amounts at the Li, Mn, P, and O sites of the compound at the same time, a significant improvement in rate capability can be achieved, while significantly reducing the dissolution of Mn and the doping elements at the Mn site, resulting in greatly improved cycle performance and/or high-temperature stability. Additionally, the specific capacity and compacted density of the positive electrode active material can also be improved.

According to some embodiments of the present application, the carbon structure and characteristics of the carbon coating layer can be determined by Raman spectroscopy. Specifically, the Raman spectrum of the positive electrode active material is first measured, and the energy spectrum of the Raman test is subjected to peak separation to obtain I_{g}/I_{d} (where I_{d} is the peak intensity of sp³ hybridized carbon atoms, I_{g} is the peak intensity of sp² hybridized carbon atoms, and the peak intensity ratio is the ratio of the peak height of sp² hybridized carbon atoms to the peak height of sp³ hybridized carbon atoms), thereby obtaining the molar ratio of sp² hybridized carbon to sp³ hybridized carbon. The molar ratio of sp² hybridized carbon atoms to sp³ hybridized carbon atoms in the carbon coating layer of the positive electrode active material is not particularly limited. For example, the molar ratio of sp² hybridized carbon atoms to sp³ hybridized carbon atoms in the carbon coating layer may be not less than 0.5; preferably, the molar ratio of sp² hybridized carbon atoms to sp³ hybridized carbon atoms in the carbon coating layer may be not less than 0.8. When the molar ratio of sp² hybridized carbon atoms to sp³ hybridized carbon atoms in the carbon coating layer is within the range described above, the carbon coating layer on the surface of the core has a relatively high degree of graphitization, and thus the structure of the carbon coating layer is denser, which can not only reduce the water absorption of the carbon coating layer, but also enable the carbon coating layer to achieve good conductivity, thereby ensuring the passage of lithium ions and being beneficial to improving the cycle performance and safety performance of the positive electrode active material. When the molar ratio of sp² hybridized carbon atoms to sp³ hybridized carbon atoms is less than 0.5, there are more amorphous sp³ carbon atoms in the carbon coating layer, and the structure of the carbon coating layer is relatively loose and porous, which is not conducive to reducing the water absorption of the carbon coating layer and makes the carbon coating layer less conductive.

According to some embodiments of the present application, the thickness of the carbon coating layer is not particularly limited. For example, the thickness of the carbon coating layer may be 10 nm; preferably, the thickness of the carbon coating layer is 4 nm-8 nm. It is only necessary to form a relatively thin carbon coating layer on the surface of the core to effectively improve the conductivity of the positive electrode active material and to improve the compaction performance when the positive electrode active material is used to prepare the battery electrode plate. When the thickness of the carbon coating layer is greater than 10 nm, it is easier to form a carbon coating layer containing relatively large pores, which will increase the possibility of the carbon coating layer absorbing and storing water. An excessively thick carbon coating layer will affect the deintercalation and intercalation of lithium ions in the core, and thus significantly reduce the specific capacity of the positive electrode active material. The thickness of the carbon coating layer can be measured by referring to the following method: A thin sheet with a thickness of about 100 nm is cut from the middle of a single particle of the positive electrode active material by FIB, and then a TEM test is performed on the thin sheet to obtain an original TEM test image, which is saved in the original image format (xx.dm3). The original image obtained from the TEM test described above is opened in the Digital Micrograph software, and the carbon coating layer is identified through the lattice spacing and included angle information. The thickness of the carbon coating layer is measured. The thickness of the selected particle at three locations is measured, and the average value is taken.

According to some embodiments of the present application, the mass fraction of the carbon element in the positive electrode active material is not particularly limited. For example, the content of the carbon element in the positive electrode active material may be not greater than 3 wt%, calculated as the sum of the mass of the core and the mass of the carbon coating layer; preferably, the content of the carbon element in the positive electrode active material may be 1 wt%-2.5 wt%. When the mass fraction of the carbon element in the positive electrode active material is not greater than 3 wt%, the content of the carbon element in the positive electrode active material is appropriate, which can not only improve the conductivity of the positive electrode active material, enhance the electron transport between particles, and promote the migration of lithium ions, but also will not cause the specific capacity of the positive electrode active material to deteriorate due to excessive carbon content. When the mass fraction of the carbon element in the positive electrode active material is greater than 3 wt%, it is difficult to form a carbon coating layer with a relatively high degree of graphitization on the surface of the core, but it is easier to form a carbon coating layer containing relatively large pores, which will increase the possibility of the carbon coating layer absorbing and storing water. The mass fraction of the carbon element in the positive electrode active material can be measured by referring to the following method: All the power switches of the carbon-sulfur analyzer are turned on, the "zero" button is pressed and held, the oxygen valve of the carbon-sulfur analyzer is opened, and the oxygen pressure is adjusted to 0.02-0.04 MPa. The "front oxygen" and "rear control" are turned on, and the flowmeter is adjusted to control the flow at about 100 L/h. Silicon molybdenum powder (0.3 g), the weighed sample (250 mg), tin granules (0.3 g), and pure iron (1 g) are added sequentially to a crucible, and the crucible is closed. The "test" button is clicked to start the test. The test result can be automatically displayed after the test is completed. The result is recorded as the C content.

According to some embodiments of the present application, the specific surface area of the positive electrode active material is not particularly limited. For example, the specific surface area of the positive electrode active material is not greater than 25 m²/g; preferably, the specific surface area of the positive electrode active material is not greater than 18 m²/g. When the specific surface area of the positive electrode active material is within the range described above, the carbon coating layer has a relatively dense pore structure and thus has a relatively weak capability of absorbing moisture, so that the positive electrode active material can have relatively high conductivity, relatively high specific capacity, and relatively low water absorption. When the specific surface area of the positive electrode active material is greater than 25 m²/g, the specific surface area of the positive electrode active material is too large, and thus the water absorption of the positive electrode active material is stronger, thereby leading to a decrease in the cycle performance of the battery. The specific surface area of the positive electrode active material can be measured by referring to the following method: A multi-station fully automatic surface area and pore analyzer GeminiVII2390 from American Micromeritics is used. Approximately 7 g of the sample is placed into a 9 cc long tube with a bulb, and the tube is degassed at 150 °C for 15 min and then placed into the main unit for testing to obtain BET data.

According to some embodiments of the present application, the particle size of the positive electrode active material is not particularly limited. For example, the median particle size of the positive electrode active material may be not greater than 2 µm; preferably, the median particle size of the positive electrode active material may be 0.5 µm-1.5 µm. When the particle size of the positive electrode active material is within the range described above, the particle size of the positive electrode active material is relatively small, and the lithium-ion migration rate is relatively fast, thereby effectively increasing the specific capacity of the positive electrode active material. The median particle size of the positive electrode active material can be measured by referring to the following method: Equipment model: Malvern 3000 (MasterSizer3000) laser particle size analyzer, and reference standard procedure: GB/T19077-2016/ISO13320:2009; specific test procedure: an appropriate amount of the test sample (ensuring a sample concentration that provides 8% to 12% obscuration) is added to 20 mL of deionized water, and the mixture is ultrasonicated externally for 5 min (53 KHz/120 W) to ensure complete dispersion of the sample; afterward, the test is conducted according to the GB/T19077-2016/ISO13320:2009 standard.

According to some embodiments of the present application, by coating at least part of the surface of the core with a porous carbon coating layer, e.g., coating with a porous carbon layer, the conductivity of the positive electrode active material can be significantly improved. For example, the powder resistivity of the phosphate core positive electrode active material having a carbon coating layer on the surface may be not greater than 200 Ω·cm; preferably, the powder resistivity of the positive electrode active material may be not greater than 100 Ω·cm. A relatively low powder resistivity can effectively reduce the interface impedance between the positive electrode active materials, thereby decreasing the energy dissipation caused by the internal resistance of the positive electrode active materials. The powder resistivity of the positive electrode active material can be measured by referring to the following method: Initial Energy Science & Technology's PRCD1000 device is used to test the powder resistivity, the device power is turned on, and the test software is opened; a balance is used to weigh the powder required for the test, a fixture is used to press the powder into a thin sheet, and the thin sheet is placed into the device; the test parameters are configured, with a test pressure of 5 t and a holding time of 5 s; and the "test" is clicked, and after the test is completed, the test result is displayed and recorded.

In the present application, whether or not the word "about" or "approximately" is used, all numbers disclosed herein are approximate values. The value of each number may have a difference of 10% or less or a reasonable difference considered by those skilled in the art, such as by 1%, 2%, 3%, 4%, or 5%.

In another aspect of the present application, the present application provides a method for preparing a positive electrode active material. Thereby, the aforementioned positive electrode active material can be obtained by a simple method, and thus, the method has all the characteristics and advantages of the aforementioned positive electrode active material, which will not be repeated here. Specifically, the method for preparing a positive electrode active material includes the following steps:

### S100: providing a core

According to some embodiments of the present application, a core of a positive electrode active material is provided in this step, and the type of the core of the positive electrode active material is not particularly limited. For example, the core may be selected from a positive electrode active material having a relatively high specific capacity; for example, the core may be selected from a phosphate positive electrode active material, such as lithium manganese phosphate, lithium iron phosphate, and lithium manganese iron phosphate; the core may also be selected from at least one of lithium cobaltate, lithium manganate, lithium nickel cobalt manganate, lithium nickel cobalt aluminum oxide, and a lithium-rich manganese-based solid solution. By forming a carbon coating layer on the surface of the core, the conductivity of the positive electrode active material can be further improved, thereby obtaining a positive electrode active material having both relatively high specific capacity and relatively good cycle performance.

### S200: forming a carbon coating layer on at least part of the surface of the core

According to some embodiments of the present application, in this step, a carbon coating layer is formed on at least part of the surface of the core. Specifically, the following steps may be included:

### S211: forming a pre-carbon coating layer on the surface of the core through a carbon source

According to some embodiments of the present application, in this step, a pre-carbon coating layer is formed on the surface of the core to obtain a pre-coated positive electrode active material. The method for forming the pre-carbon coating layer on the surface of the core is not particularly limited. For example, the carbon source and the core can be placed in the same reaction vessel, and the carbon source can be reacted on the surface of the core by hydrothermal treatment to form a carbon coating layer on the surface of the core; the carbon source and the core can also be placed in a ball milling device, such as a sand mill, and the carbon source is mechanically mixed to form a carbon coating layer on the surface of the core. According to other embodiments of the present application, the carbon source includes a first carbon source and a second carbon source. The first carbon source includes at least one of polyvinyl alcohol, polyethylene glycol, and citric acid; the second carbon source includes at least one of starch, sucrose, and glucose. Preferably, the molecular weight of the first carbon source is not less than 1000, and more preferably, the molecular weight of the first carbon source may be 2000-5000. Thereby, a pre-carbon coating layer with uniform distribution and uniform thickness can be formed on the surface of the core by the ball milling treatment, which is conducive to forming a dense and uniform carbon coating layer pore structure after a sintering treatment.

In the description of the present application, "A and/or B" may include any of the following cases: A alone, B alone, and A and B, where A and B are only used for examples, and they may refer to any technical features connected by "and/or" as used in the present application.

### S212: performing a sintering treatment on the pre-coated positive electrode active material under an inert gas atmosphere

According to some embodiments of the present application, in this step, a sintering treatment is performed on the pre-coated positive electrode active material to obtain the positive electrode active material. The sintering treatment should be performed under an inert atmosphere to avoid the oxidation reaction of the carbon source and thus avoid the failure to obtain a carbon coating layer with a relatively high degree of graphitization. The type of inert gas is not particularly limited. For example, the inert gas may include at least one of nitrogen and helium. The conditions of the sintering treatment are not particularly limited. For example, the sintering treatment may be performed at a temperature of 650 °C-800 °C, and the sintering treatment may be performed for 6 h-12 h. Thereby, a carbon coating layer with a relatively high degree of graphitization can be formed on the surface of the core. The inventors have found that as the temperature of the sintering treatment increases, the degree of graphitization of the carbon in the carbon coating layer also increases. The degree of graphitization of the carbon coating layer can be effectively controlled by controlling the highest sintering treatment of the sintering treatment, and thus the carbon coating layer has a dense pore structure and relatively good conductivity.

According to other embodiments of the present application, in this step, a carbon coating layer is formed on at least part of the surface of the core. Specifically, the following steps may further be included:

### S221: mixing the core with the first carbon source and performing a first sintering treatment

According to some embodiments of the present application, in this step, a first carbon coating layer is formed on the surface of the core through a first carbon source to obtain a first coated positive electrode active material. The type of the first carbon source is not particularly limited. For example, the first carbon source may include at least one of polyvinyl alcohol, polyethylene glycol (PEG), and citric acid. Specifically, when the first carbon source is a polymer, the molecular weight of the first carbon source may be not less than 1000; preferably, the molecular weight of the first carbon source is 2000-5000. More specifically, the first carbon source may be polyethylene glycol with a molecular weight of 2000-4000.

According to some embodiments of the present application, the conditions of the first sintering treatment are not particularly limited. For example, the first sintering treatment may be performed at a temperature of 350 °C-800 °C, and the first sintering treatment may be performed for 6 h-12 h, so that a carbon coating layer with a relatively high degree of graphitization can be finally formed on the surface of the core.

### S222: mixing the first coated positive electrode active material with the second carbon source and performing a second sintering treatment

According to some embodiments of the present application, in this step, a positive electrode active material is obtained through the second sintering treatment. The type of the second carbon source is not particularly limited. For example, the second carbon source may include at least one of starch, sucrose, and glucose. Preferably, the second carbon source may be glucose.

According to some embodiments of the present application, mixing the first coated positive electrode active material with the second carbon source may include: adding the second carbon source to an optional solvent and dissolving it at 20 °C-60 °C, then adding the first coated positive electrode active material to the aforementioned solvent containing the second carbon source, and then grinding and mixing for 6 h-24 h to obtain a mixed liquid, which is dried and then used for the second sintering treatment.

According to some embodiments of the present application, the conditions of the second sintering treatment are not particularly limited. For example, the second sintering treatment may be performed at a temperature of 650 °C-850 °C, and the second sintering treatment may be performed for 6 h-24 h, so that a carbon coating layer with a molar ratio of sp² hybridized carbon atoms to sp³ hybridized carbon atoms of not less than 0.5 can be formed on the surface of the core.

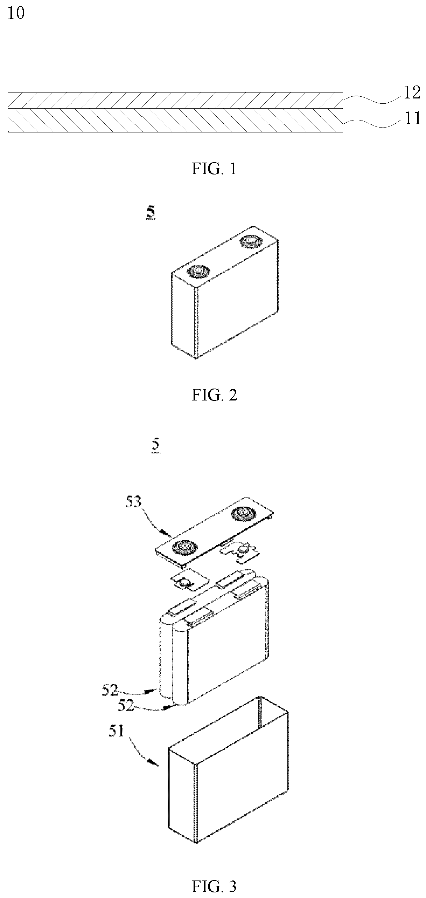

In another aspect of the present application, referring to FIG. 1, the present application provides a positive electrode plate 10, which includes a positive electrode current collector 11 and a positive electrode active material layer 12, where the positive electrode active material layer 12 is located on one side of the positive electrode current collector 11, and the positive electrode active material layer 12 includes the aforementioned positive electrode active material. Thereby, the positive electrode plate has all the characteristics and advantages of the aforementioned positive electrode active material, which will not be repeated here. As an example, the positive electrode current collector 11 has two surfaces opposite to each other in its own thickness direction, and the positive electrode active material layer 12 may be disposed on any one or both of the two opposite surfaces of the positive electrode current collector 11.

According to some embodiments of the present application, the positive electrode plate can be prepared in the following manner: dispersing the components described above for preparing the positive electrode plate, such as the positive electrode active material, the conductive agent, the adhesive, and any other components, in a solvent (such as *N-*methylpyrrolidone) to form a positive electrode slurry; and coating the positive electrode current collector with the positive electrode slurry, and performing drying, cold pressing, and other processes, such that the positive electrode plate can be obtained.

According to some embodiments of the present application, the adhesive is a high molecular polymer, and its main functions include bonding and maintaining the positive electrode active material, enhancing the contact between the positive electrode active material and the conductive agent and between the positive electrode active material and the current collector, and also stabilizing the structure of the electrode plate at the same time. According to other embodiments of the present application, the type of the adhesive is not particularly limited. For example, the adhesive may include at least one of polyvinylidene difluoride and polyacrylonitrile.

In another aspect of the present application, the present application provides a battery, which includes a positive electrode plate, where the positive electrode plate is the aforementioned positive electrode plate. Thereby, the battery has all the characteristics and advantages of the aforementioned positive electrode plate, which will not be repeated here. Typically, a battery includes a positive electrode plate, a negative electrode plate, an electrolyte, and a separation film. During the charging and discharging process of the battery, active ions are intercalated and deintercalated back and forth between the positive electrode plate and the negative electrode plate. The electrolyte conducts ions between the positive electrode plate and the negative electrode plate. The separation film is disposed between the positive electrode plate and the negative electrode plate to primarily prevent the positive and negative electrodes from short-circuiting, while allowing the passage of ions.

According to some embodiments of the present application, the present application does not particularly limit the shape of the battery, and it may have a cylindrical shape, a prismatic shape, or any other shape. For example, FIG. 2 shows a battery 5 having a prismatic structure as one example. Specifically, referring to FIG. 3, the outer packaging may include a housing 51 and a cover plate 53. The housing 51 may include a bottom plate and a side plate connected to the bottom plate, and the bottom plate and the side plate define an accommodating cavity. The housing 51 is provided with an opening communicating with the accommodating cavity, and the cover plate 53 is capable of lidding the opening to close the accommodating cavity. The positive electrode plate, the negative electrode plate, and the separation film may be subjected to a winding process or a stacking process to form an electrode assembly 52. The electrode assembly 52 is packaged in the accommodating cavity. The electrolytic solution is infiltrated into the electrode assembly 52. The number of the electrode assembly 52 included in the battery 5 may be one or more, and those skilled in the art can select the number according to specific and actual needs.

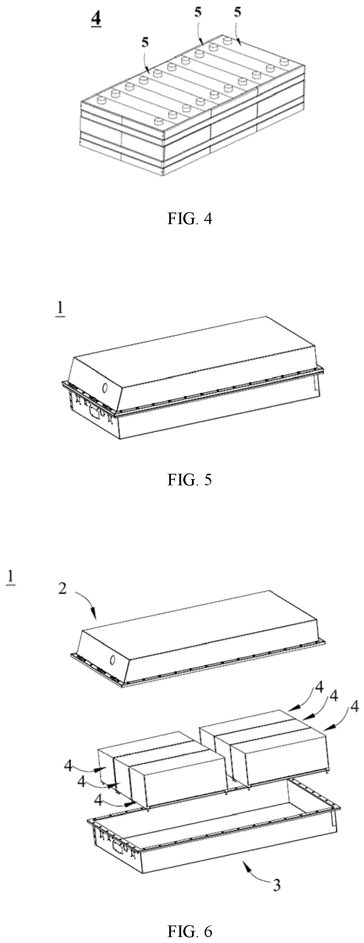

According to some embodiments of the present application, the battery may be assembled into a battery module. The number of batteries included in the battery module may be one or more, and the specific number may be selected by those skilled in the art based on the use and capacity of the battery module. FIG. 4 shows a battery module 4 as one example. Referring to FIG. 4, in the battery module 4, a plurality of batteries 5 may be sequentially arranged in a length direction of the battery module 4. Certainly, the arrangement may also be in any other manner. Further, the plurality of batteries 5 may be fixed by a fastener. The battery module 4 may further include a shell having an accommodating space in which the plurality of batteries 5 are accommodated.

In the descriptions of the present application, "a plurality" means two or more.

According to some embodiments of the present application, the battery module described above may also be assembled into a battery pack. The number of battery modules included in the battery pack may be one or more, and the specific number may be selected by those skilled in the art based on the use and capacity of the battery pack. FIG. 5 and FIG. 6 show a battery pack 1 as one example. Referring to FIG. 5 and FIG. 6, the battery pack 1 may include a battery case and a plurality of battery modules 4 disposed in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In another aspect of the present application, the present application provides an electric device, which includes a battery, where the battery is the aforementioned battery. Thereby, the electric device has all the characteristics and advantages of the aforementioned battery, which will not be repeated here. The battery, the battery module, or the battery pack can be used as a power source for the electric device, and they can also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like. A battery, a battery module, or a battery pack may be selected based on the use requirements of the electric device.

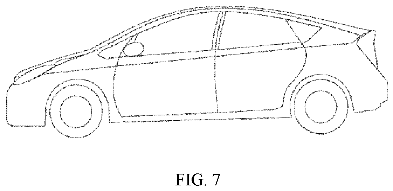

According to some embodiments of the present application, FIG. 7 shows an electric device as one example. The electric device is a pure electric vehicle, a hybrid electric vehicle, a plug-in hybrid electric vehicle, or the like. To meet the requirements of the electric device for high power and high energy density of the battery, the battery pack or the battery module may be used.

According to some embodiments of the present application, the electric device may also be a mobile phone, a tablet computer, a notebook computer, or the like. The device is generally required to be light and thin, and a battery can thus be used as a power source.

The scheme of the present application is described below through specific examples. It should be noted that the following examples are only used to illustrate the present application and should not be construed as limiting the scope of the present application. Examples without techniques or conditions specified therein are implemented according to techniques or conditions described in the literature in the art or according to product instructions. Reagents or instruments used herein without specified manufacturers are all commercially available conventional products.

### Example 1:

Step S1: 689.6 g of manganese carbonate, 455.27 g of ferrous carbonate, 4.65 g of cobalt sulfate, and 4.87 g of vanadium(II) chloride were added to a mixer and fully mixed for 6 h. The obtained mixture was then transferred into a reaction kettle, and 5 L of deionized water and 1260.6 g of oxalic acid dihydrate were added. The resulting mixture was heated to 80 °C, fully stirred at a rotation speed of 500 rpm for 6 h, and well mixed until the reaction was terminated and no bubbles were generated to obtain a manganese oxalate suspension co-doped with Fe, Co, and V. The suspension was then filtered, dried at 120 °C, and sand-milled to obtain manganese oxalate particles co-doped with Fe, Co, V, and S, with a particle size of 100 nm.

Step S2: 1793.1 g of manganese oxalate prepared in step S1, as well as 368.3 g of lithium carbonate, 1146.6 g of ammonium dihydrogen phosphate, and 4.9 g of dilute sulfuric acid were added to 20 L of deionized water, and the mixture was fully stirred and well mixed for reaction at 80 °C for 10 h to obtain a slurry. The slurry was transferred into a spray drying device for spray drying and granulation to obtain a powder. The powder was sintered in a roller kiln at 700 °C for 4 h under a protective atmosphere (90% nitrogen and 10% hydrogen) to obtain a core of a positive electrode active material of Li_{0.997}H_{0.60}Fe_{0.393}V_{0.004}Co_{0.003}P_{0.997}S_{0.003}O₄.

Step S3: PEG-1000 was selected as the first carbon source. 58.2 g of PEG-1000 was dissolved in 500 g of deionized water, and the mixture was then stirred for thorough dissolution to obtain an aqueous solution. 1571.9 g of the core material described above was added to the solution, and the resulting mixture was stirred and mixed for 6 h until it was well mixed. After spray drying, a first sintering treatment was performed at a temperature of 600 °C for 9 h. After the first sintering treatment, a first coated positive electrode active material was obtained.

Step S4: Glucose was selected as the second carbon source. 37.3 g of glucose was dissolved in 500 g of deionized water, and the mixture was then stirred for thorough dissolution to obtain an aqueous glucose solution. 1603.3 g of the first coated positive electrode active material obtained in step S3 was added to the aforementioned glucose solution, and the resulting mixture was stirred and mixed for 6 h until it was well mixed. After spray drying, a second sintering treatment was performed at a temperature of 750 °C for 20 h. After the second sintering treatment, a positive electrode active material was obtained.

Examples 2-20 and Comparative Examples 1-3 are the same as Example 1, except for the selection of the carbon source and the temperature of the sintering treatment, see Table 1 for details.

**Table 1**

| Number | Type of first carbon source | Temperature of first sintering treatment/°C | Time of first sintering treatment/h | Type of second carbon source | Temperature of second sintering treatment/°C | Time of second sintering treatment/h |
|---|---|---|---|---|---|---|
| Example 1 | PEG-1000 | 600 | 9 | Glucose | 750 | 20 |
| Example 2 | PEG-1500 | 600 | 9 | Glucose | 750 | 20 |
| Example 3 | PEG-2000 | 600 | 9 | Glucose | 750 | 20 |
| Example 4 | PEG-3000 | 600 | 9 | Glucose | 750 | 20 |
| Example 5 | PEG-4000 | 600 | 9 | Glucose | 750 | 20 |
| Example 6 | PEG-5000 | 600 | 9 | Glucose | 750 | 20 |
| Example 7 | PEG-6000 | 600 | 9 | Glucose | 750 | 20 |
| Example 8 | PEG-2000 | 630 | 9 | Glucose | 750 | 20 |
| Example 9 | PEG-2000 | 660 | 9 | Glucose | 750 | 20 |
| Example 10 | PEG-2000 | 660 | 9 | Sucrose | 780 | 20 |
| Example 11 | PEG-2000 | 660 | 9 | Sucrose | 800 | 20 |
| Example 12 | PEG-2000 | 660 | 9 | Sucrose | 850 | 20 |
| Example 13 | PEG-2000 | 660 | 9 | Sucrose | 650 | 20 |
| Example 14 | PEG-2000 | 660 | 9 | Sucrose | 750 | 6 |
| Example 15 | PEG-2000 | 660 | 9 | Sucrose | 750 | 10 |
| Example 16 | PEG-2000 | 350 | 9 | Glucose | 750 | 20 |
| Example 17 | PEG-2000 | 800 | 9 | Glucose | 750 | 20 |
| Example 18 | Polyvinyl alcohol 3000 | 660 | 9 | Glucose | 750 | 20 |
| Example 19 | Citric acid | 660 | 9 | Glucose | 750 | 20 |
| Example 20 | PEG-2000 | 660 | 9 | Starch | 750 | 20 |
| Comparative Example 1 | PEG-8000 | 550 | 5 | Glucose | 600 | 20 |
| Comparative Example 2 | PEG-10000 | 500 | 5 | Glucose | 550 | 20 |
| Comparative Example 3 | PEG-20000 | 480 | 5 | Glucose | 500 | 20 |

It should be noted that PEG-1000 refers to polyethylene glycol with a molecular weight of 900-1100, PEG-1500 refers to polyethylene glycol with a molecular weight of 1350-1650, PEG-2000 refers to polyethylene glycol with a molecular weight of 1800-2200, PEG-3000 refers to polyethylene glycol with a molecular weight of 2700-3300, PEG-4000 refers to polyethylene glycol with a molecular weight of 3500-4400, PEG-6000 refers to polyethylene glycol with a molecular weight of 5500-7000, PEG-8000 refers to polyethylene glycol with a molecular weight of 7200-8800, PEG-10000 refers to polyethylene glycol with a molecular weight of 8500-11500, and PEG-20000 refers to polyethylene glycol with a molecular weight of 19000-21000.

The following tests were performed on the positive electrode active materials in Examples 1-11 and Comparative Examples 1-3. The test results are shown in Table 2:
1. Determination of hybridization morphology of carbon atoms in carbon coating layer: This test was performed by Raman spectroscopy. The energy spectrum of the Raman test was subjected to peak separation to obtain I_{g}/I_{d}, where I_{d} was the peak intensity of sp³-type carbon and I_{g} was the peak intensity of sp²-type carbon, thereby confirming the molar ratio of the two.
2. Test for carbon coating layer thickness: The thickness of the carbon coating layer was measured as follows: a thin sheet with a thickness of about 100 nm was cut from the middle of a single particle of the positive electrode active material prepared above by FIB, and then a TEM test was performed on the thin sheet to obtain an original TEM test image, which was saved in the original image format (xx.dm3). The original image obtained from the TEM test described above was opened in the Digital Micrograph software, and the carbon coating layer was identified through the lattice spacing and included angle information. The thickness of the carbon coating layer was measured. The thickness of the selected particle at three locations was measured, and the average value was taken.
3. Test for content of carbon element in positive electrode active materials: All the power switches of the carbon-sulfur analyzer were turned on, the "zero" button was pressed and held, the oxygen valve of the carbon-sulfur analyzer was opened, and the oxygen pressure was adjusted to 0.02-0.04 MPa. The "front oxygen" and "rear control" were turned on, and the flowmeter was adjusted to control the flow at about 100 L/h. Silicon molybdenum powder (0.3 g), the weighed sample (250 mg), tin granules (0.3 g), and pure iron (1 g) were added sequentially to a crucible, and the crucible was closed. The "test" button was clicked to start the test. The test result could be automatically displayed after the test was completed. The result was recorded as the C content.
4. Test for specific surface area of positive electrode active materials: A multi-station fully automatic surface area and pore analyzer Gemini VII2390 from American Micromeritic was used. Approximately 7 g of the positive electrode active material sample was placed into a 9 cc long tube with a bulb, and the tube was degassed at 150 °C for 15 min and then placed into the main unit for testing to obtain BET data.
5. Test for median particle size of positive electrode active materials: Equipment model: Malvern 3000 (MasterSizer3000) laser particle size analyzer, and reference standard procedure: GB/T19077-2016/ISO13320:2009; specific test procedure: an appropriate amount of the test sample (ensuring a sample concentration that provided 8% to 12% obscuration) was added to 20 mL of deionized water, and the mixture was ultrasonicated externally for 5 min (53 KHz/120 W) to ensure complete dispersion of the sample; afterward, the test was conducted according to the GB/T19077-2016/ISO13320:2009 standard.
6. Test for powder resistivity of positive electrode active materials: Initial Energy Science & Technology's PRCD1000 device was used to test the powder resistivity, the device power was turned on, and the test software was opened; a balance was used to weigh the powder required for the test, a fixture was used to press the powder into a thin sheet, and the thin sheet was placed into the device; the test parameters were configured, with a test pressure of 5 t and a holding time of 5 s; and the "test" was clicked, and after the test was completed, the test result was displayed and recorded.
7. Test for water absorption of positive electrode active materials: 5 g of the positive electrode active material sample was heated and dried at 110 °C for 12 h, and then the sample was put into a vial. The vial containing the sample was placed into the automatic sampling system of the Karl Fischer device. During the test, the vial containing the sample was heated at 250 °C and purged with a dry gas, and a titration vessel was purged with the gas from the vial for absorption titration. The results were converted into the water content of the solid sample.
8. Test for specific capacity of positive electrode active materials: (1) Preparation of button battery: The positive electrode active material prepared above, polyvinylidene difluoride (PVDF), and acetylene black were added to N-methylpyrrolidone (NMP) in a weight ratio of 90:5:5, and the mixture was stirred in a drying room to form a slurry. An aluminum foil was coated with the slurry described above, followed by drying and cold pressing to prepare a positive electrode plate. The coating amount was 0.2 g/cm², and the compacted density was 2.0 g/cm³. A lithium foil was used as the negative electrode, and a solution of 1 mol/L LiPF₆ in ethylene carbonate (EC), diethyl carbonate (DEC), and dimethyl carbonate (DMC), which were in a volume ratio of 1:1:1, was used as the electrolytic solution. The negative electrode and the electrolytic solution were assembled with the positive electrode plate prepared above into a button battery in a button box.

(2) Measurement of initial specific capacity of button battery: At 2.5 V to 4.3 V, the button battery was charged to 4.3 V at 0.1 C, and then charged at a constant voltage of 4.3 V until the current was less than or equal to 0.05 mA. After being left to rest for 5 min, the button battery was discharged to 2.0 V at 0.1 C. The discharge capacity at this point was considered the initial specific capacity and recorded as the specific capacity of the positive electrode active material.

Full batteries were prepared using the positive electrode active materials in Examples 1-11 and Comparative Examples 1-3, respectively. The preparation of the full battery was as follows:
The positive electrode active material described above, the conductive agent acetylene black, and the binder polyvinylidene difluoride (PVDF) were well mixed at a weight ratio of 92:2.5:5.5 in an N-methylpyrrolidone solvent system, and an aluminum foil was then coated with the mixture, followed by drying and cold pressing to obtain a positive electrode plate. The coating amount was 0.4 g/cm², and the compacted density was 2.4 g/cm³.

The negative electrode active material artificial graphite, the hard carbon, the conductive agent acetylene black, the binder styrene-butadiene rubber (SBR), and the thickener sodium carboxymethylcellulose (CMC) were well mixed at a weight ratio of 90:5:2:2:1 in deionized water, and a copper foil was then coated with the mixture, followed by drying and cold pressing to obtain a negative electrode plate. The coating amount was 0.2 g/cm², and the compacted density was 1.7 g/cm³.

A thin polyethylene (PE) porous polymer film was used as a separation film, and the positive electrode plate, the separation film, and the negative electrode plate were stacked in sequence, with the separation film positioned between the positive and negative electrodes to fulfill the function of separation. The stack was then wound to obtain a bare battery cell. The bare battery cell was placed in an outer packaging, and the electrolytic solution was injected, followed by packaging to obtain a full battery.

The full batteries in Examples 1-11 and Comparative Examples 1-3 were subjected to a cycle performance test. The full battery cycle performance test was as follows: In a constant temperature environment of 45 °C, at 2.5 V-4.3 V, the full battery was charged to 4.3 V at 1 C, and then charged at a constant voltage of 4.3 V until the current was less than or equal to 0.05 mA. After being left to rest for 5 min, the battery was discharged to 2.5 V at 1 C. The discharge capacity at this point was recorded as D₀. The aforementioned charge-discharge cycle was repeated until the discharge capacity dropped to 80% of D₀. The number of cycles the battery had undergone at this point was recorded. The test results are shown in Table 2.

**Table 2**

| Number | Carbon coating layer | | Positive electrode active material | | | Resistivity of positive electrode active material powder /(Ω·cm) | Water absorption of positive electrode active material | Battery cycle performance (cls@ 80% SOH, 45 °C) | Specific capacity of positive electrode active material /(mAh/g) |
|---|---|---|---|---|---|---|---|---|---|
| | Molar ratio of sp² hybridized carbon to sp³ hybridized carbon | Thickness/nm | Content of carbon element/wt% | Specific surface area /(m²/g) | Median particle size/µm | | | | |
| | | | | | | | /(ppm) | | |
| Example 1 | 0.5 | 3 | 1.85 | 17.8 | 0.6 | 119 | 685 | 729 | 155.1 |
| Example 2 | 0.6 | 3 | 1.84 | 17.2 | 0.8 | 67 | 618 | 1095 | 156.4 |
| Example 3 | 0.8 | 3 | 1.86 | 16.4 | 1.2 | 35 | 463 | 1398 | 157.1 |
| Example 4 | 0.8 | 4 | 1.93 | 16.8 | 1.1 | 38 | 489 | 1467 | 156.6 |
| Example 5 | 0.8 | 6 | 2.12 | 17.5 | 1 | 32 | 512 | 1594 | 156.1 |
| Example 6 | 0.8 | 7 | 2.2 | 17.8 | 0.9 | 56 | 584 | 1385 | 155.6 |
| Example 7 | 0.8 | 8 | 2.9 | 18.2 | 0.8 | 28 | 526 | 1689 | 154.9 |
| Example 8 | 0.8 | 10 | 3 | 18.9 | 0.7 | 25 | 535 | 1879 | 151.8 |
| Example 9 | 0.8 | 1.5 | 1 | 12.6 | 1.4 | 45 | 375 | 689 | 156.8 |
| Example 10 | 0.8 | 5.4 | 2 | 17.8 | 1 | 34 | 469 | 1489 | 155.9 |
| Example 11 | 0.8 | 6.5 | 2.5 | 19.4 | 0.9 | 28 | 546 | 1798 | 154.7 |
| Example 12 | 0.8 | 8 | 3 | 20.1 | 0.7 | 23 | 612 | 1673 | 152.2 |
| Example 13 | 0.6 | 7 | 2.3 | 18.7 | 0.8 | 56 | 674 | 1452 | 154.6 |
| Example 14 | 0.5 | 7 | 2.2 | 15.7 | 0.9 | 86 | 659 | 1531 | 154.4 |
| Example 15 | 0.6 | 6 | 2.1 | 16.5 | 1 | 67 | 643 | 1642 | 155.8 |
| Example 16 | 0.5 | 5 | 1.95 | 17.8 | 1.1 | 89 | 643 | 1253 | 156.1 |
| Example 17 | 0.8 | 4 | 1.9 | 15.8 | 1.1 | 95 | 679 | 1345 | 156.4 |
| Example 18 | 0.6 | 4 | 1.9 | 17.4 | 0.7 | 27 | 543 | 1462 | 156.7 |
| Example 19 | 0.5 | 3 | 1.8 | 16.9 | 0.6 | 36 | 613 | 1234 | 155.3 |
| Example 20 | 0.6 | 6 | 1.7 | 17.8 | 0.8 | 39 | 682 | 1189 | 153.7 |
| Comparative Example 1 | 0.4 | 12 | 3.6 | 26.1 | 1.8 | 397 | 897 | 521 | 144.6 |
| Comparative Example 2 | 0.3 | 15 | 3.7 | 28.4 | 2.2 | 479 | 1247 | 465 | 143.8 |
| Comparative Example 3 | 0.2 | 18 | 3.5 | 32.5 | 2.5 | 529 | 1598 | 389 | 141.8 |

The test results show that when the molar ratio of sp² hybridized carbon to sp³ hybridized carbon in the carbon coating layer of the positive electrode active material is less than 0.5, the water absorption of the positive electrode active material is significantly improved, reaching 890 ppm or more. Correspondingly, excessive water content will cause the lithium salt in the battery electrolytic solution to decompose, which can significantly reduce the cycle performance of the battery.

It can be understood that in order to control variables in the aforementioned examples and comparative examples, the same type of core is selected for subsequent preparation of positive electrode active materials, that is, the selection of the aforementioned core material is exemplary. The relevant characteristics of the carbon coating layer of the positive electrode active material in the present application can be combined with other core materials in a suitable manner. For example, the type of core material may include at least one of lithium manganese phosphate, lithium iron phosphate, lithium manganese iron phosphate, lithium cobaltate, lithium manganate, lithium nickel cobalt manganate, lithium nickel cobalt aluminum oxide, and lithium-rich manganese-based solid solution. By forming the aforementioned carbon coating layer on the surface of the core, the conductivity of the positive electrode active material can be further improved, thereby obtaining a positive electrode active material having both relatively high specific capacity and relatively good cycle performance.

Unless otherwise indicated, all scientific and technical terms used in the present application have the same meaning as commonly understood by those skilled in the art to which the present application belongs. All patents and publications referred to in the present application are incorporated herein by reference in their entirety. The terms "contain", "comprise", and "include" are intended to be open-ended expressions, that is, they encompass the elements specified in the present application but do not exclude other elements.

In the description of this specification, the reference terms "one embodiment", "another embodiment", and the like mean that the specific features, structures, materials or characteristics described in connection with the embodiments are included in at least one embodiment of the present application. In this specification, the schematic expressions of the above terms are not necessarily directed to the same embodiment or example. Moreover, the specific features, structures, materials, or characteristics described may be combined appropriately in any one or more embodiments or examples. In addition, various embodiments or examples and features of various embodiments or examples described in this specification can be combined by one skilled in the art to the extent that they do not contradict each other. In addition, it should be noted that in this specification, the terms "first" and "second" are used herein for descriptive purposes only and should not be construed as indicating or implying relative importance or implicitly indicating the number of technical features described.

Although the embodiments of the present application have been shown and described above, it will be understood that the above embodiments are exemplary and not to be construed as limiting the present application, and that changes, modifications, substitutions, and alterations can be made to the above embodiments by those of ordinary skill in the art within the scope of the present application.

## Claims

1. A positive electrode active material, comprising:
a core; and
a carbon coating layer, the carbon coating layer covering at least part of the surface of the core,
wherein a molar ratio of sp² hybridized carbon atoms to sp³ hybridized carbon atoms in the carbon coating layer is not less than 0.5.

2. The positive electrode active material according to claim 1, wherein the core comprises a phosphate; preferably, the phosphate comprises at least one of lithium manganese phosphate, lithium iron phosphate, and lithium manganese iron phosphate.

3. The positive electrode active material according to claim 1, wherein the core comprises LiMPO₄, the M element comprising Mn and a non-Mn element.

4. The positive electrode active material according to claim 3, wherein the non-Mn element comprises one or two of a first doping element and a second doping element, the first doping element being doped at the manganese site, and the second doping element being doped at the phosphorus site.

5. The positive electrode active material according to claim 4, wherein the first doping element comprises one or more elements of Zn, Al, Na, K, Mg, Mo, W, Ti, V, Zr, Fe, Ni, Co, Ga, Sn, Sb, Nb, and Ge; preferably, the first doping element comprises at least two of Fe, Ti, V, Ni, Co, and Mg.

6. The positive electrode active material according to claim 4, wherein the second doping element comprises one or more elements of B (boron), S, Si, and N.

7. The positive electrode active material according to any one of claims 3-6, wherein the core comprises Li₁₊ₓMn_{1-y}A_{y}P_{1-z}R_{z}O₄, wherein x is any value in the range of -0.100 to 0.100, y is any value in the range of 0.001 to 0.500, z is any value in the range of 0.001 to 0.100, A comprises one or more elements of Zn, Al, Na, K, Mg, Mo, W, Ti, V, Zr, Fe, Ni, Co, Ga, Sn, Sb, Nb, and Ge, and R comprises one or more elements of B (boron), S, Si, and N.

8. The positive electrode active material according to any one of claims 3-6, wherein the core comprises Li₁₊ₓCₘMn_{1-y}A_{y}P_{1-z}R_{z}O₄₋ₙDₙ, wherein x is any value in the range of -0.100 to 0.100, y is any value in the range of 0.001 to 0.500, z is any value in the range of 0.001 to 0.100, n is any value in the range of 0.001 to 0.1, m is any value in the range of 0.9 to 1.1, C comprises one or more elements of Zn, Al, Na, K, Mg, Nb, Mo, and W, A comprises one or more elements of Zn, Al, Na, K, Mg, Mo, W, Ti, V, Zr, Fe, Ni, Mg, Co, Ga, Sn, Sb, Nb, and Ge, R comprises one or more elements of B (boron), S, Si, and N, and D comprises one or more elements of S, F, Cl, and Br.

9. The positive electrode active material according to any one of claims 1-8, wherein the molar ratio of sp² hybridized carbon atoms to sp³ hybridized carbon atoms in the carbon coating layer is not less than 0.8.

10. The positive electrode active material according to any one of claims 1-9, wherein a thickness of the carbon coating layer is not greater than 10 nm; preferably, the thickness of the carbon coating layer is 4 nm-8 nm.

11. The positive electrode active material according to any one of claims 1-10, wherein a content of the carbon element in the positive electrode active material is not greater than 3 wt%; preferably, the content of the carbon element in the positive electrode active material is 1 wt%-2.5 wt%.

12. The positive electrode active material according to any one of claims 1-11, wherein a specific surface area of the positive electrode active material is not greater than 25 m²/g; preferably, the specific surface area of the positive electrode active material is not greater than 18 m²/g.

13. The positive electrode active material according to any one of claims 1-12, wherein a median particle size of the positive electrode active material is not greater than 2 µm; preferably, the median particle size of the positive electrode active material is 0.5 µm-1.5 µm.

14. The positive electrode active material according to any one of claims 1-13, wherein a powder resistivity of the positive electrode active material is not greater than 200 Ω·cm; preferably, the powder resistivity of the positive electrode active material is not greater than 100 Ω·cm.

15. A method for preparing a positive electrode active material, wherein
a core is provided; and
a carbon coating layer is formed on at least part of the surface of the core, wherein a molar ratio of sp² hybridized carbon atoms to sp³ hybridized carbon atoms in the carbon coating layer is not less than 0.5.

16. The method according to claim 15, wherein forming the carbon coating layer on at least part of the surface of the core comprises: forming a pre-carbon coating layer on the surface of the core through a carbon source to obtain a pre-coated positive electrode active material; and performing a sintering treatment on the pre-coated positive electrode active material to form the carbon coating layer, thereby obtaining the positive electrode active material, wherein the carbon source comprises a first carbon source and a second carbon source.

17. The method according to claim 15, wherein forming the carbon coating layer on at least part of the surface of the core comprises: mixing the core with the first carbon source, and performing a first sintering treatment to obtain a first coated positive electrode active material; and mixing the first coated positive electrode active material with the second carbon source, and performing a second sintering treatment to obtain the positive electrode active material.

18. The method according to claim 16 or 17, wherein the first carbon source comprises at least one of polyvinyl alcohol, polyethylene glycol, and citric acid; the second carbon source comprises at least one of starch, sucrose, and glucose.

19. The method according to any one of claims 16-18, wherein when the first carbon source is a polymer, a molecular weight of the first carbon source is not less than 1000; preferably, the molecular weight of the first carbon source is 2000-5000.

20. The method according to claim 16, 18, or 19, wherein the sintering treatment is performed at a temperature of 650 °C-800 °C, and the sintering treatment is performed for 6 h-12 h.

21. The method according to any one of claims 17-19, wherein the first sintering treatment is performed at a temperature of 350 °C-800 °C, and the first sintering treatment is performed for 6 h-12 h.

22. The method according to any one of claims 17-19, wherein the second sintering treatment is performed at a temperature of 650 °C-850 °C, and the second sintering treatment is performed for 6 h-24 h.

23. A positive electrode plate, comprising a positive electrode current collector and a positive electrode active material layer, wherein the positive electrode active material layer is located on one side of the positive electrode current collector, the positive electrode active material layer comprises the positive electrode active material according to any one of claims 1-14, and/or the positive electrode active material layer comprises a positive electrode active material prepared by using the method according to any one of claims 15-22.

24. A battery, comprising a positive electrode plate, wherein the positive electrode plate is the positive electrode plate according to claim 23.

25. An electric device, comprising a battery, wherein the battery is the battery according to claim 24.
